# EUROPEAN PATENT APPLICATION

(11) **EP 4 459 346 A2**
(43) Date of publication of application: **06.11.2024**
(21) Application number: 24174070.3
(22) Date of filing: 03.05.2024
(51) Int. Cl.: G02B 6/44

(54) **OPTICAL FIBER CABLE WITH METAL ARMORING**

(30) Priority: 05.05.2023 IN 202311032006
(71) Applicant: Sterlite Technologies Limited, Gurugram, Haryana 122102 (IN)
(72) Inventor: SINGH, SOURABH, 122102 Gurugram (IN); SHUKLA, VIKASH, 122102 Gurugram (IN); SACHAN, SHUBHAM, 122102 Gurugram (IN)
(74) Representative: Sach, Greg Robert

(57) **Abstract**

The present disclosure relates to an optical fiber cable (100) having a plurality of optical fibers (102a-102n), a first layer (104) having first and second end portions (112, 114) such that the first end portion (112) overlaps the second end portion (114) to define a first overlap region (122) and a second layer (106) having third and fourth end portions (116, 118) such that the third end portion (116) overlaps the fourth end portion (118) to define a second overlap region (124). Further, the first overlap region (122) and the second overlap region (124) are positioned differently at any cross-section along the axial length of the optical fiber cable (100).

## Description

### TECHNICAL FIELD

Embodiments of the present disclosure relate to the field of telecommunication fiber, and more particularly, relates to an optical fiber cable with metal armoring that can be beneficial to reprocessing again of cost.
This application claims the benefit of Indian Application No. "202311032006" titled "OPTICAL FIBER CABLE WITH METAL ARMORING" filed by the applicant on May 23, 2024, which is incorporated herein by reference in its entirety.

### Background Art

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information. In a typical cable arrangement, optical fibers are placed in a tubular assembly. A tube may be disposed inside an outer jacket or may form the outer jacket. In either case, the tube typically provides at least some level of protection for the fibers contained therein.

Optical fibers are ordinarily susceptible to damage from water and physical stress. Without an adequate barrier, moisture may migrate into a fiber optic cable and weaken or destroy the cable's optical fibers. Without sufficient physical protection, stress or shock associated with handling the fiber optic cable may transfer to the optical fibers, causing breakage or stress-induced signal attenuation.

One conventional technique for protecting the optical fibers from damage is to fill the cable with a fluid, a gel, a grease, or a thixotropic material that strives to block moisture incursion and to absorb mechanical shock. Such fluids and gels are typically messy and difficult to process, not only in a manufacturing environment but also during field service operations. Field personnel often perform intricate and expensive procedures to clean such conventional materials from optical fibers in preparation for splicing, termination, or some other procedure. Any residual gel or fluid can render a splice or termination inoperably defective, for example compromising physical or optical performance.

Another conventional technology for protecting optical fibers entails placing a water absorbent chemical, such as water-swellable material, within the cable. The chemical absorbs water that may inadvertently enter the cable, and swells to prevent the water from traveling down long lengths of cable and degrading the delicate optical fibers. In one conventional approach, particles of the water absorbent chemical are mixed with the gel discussed above, and the mixture is inserted into the cable. This approach typically suffers from the same drawbacks as using a pure form of a gel; gels and related materials are messy and difficult to process.

In another conventional approach, a water-swellable chemical is applied to the surface of a tape or a yarn that is inserted in the cable lengthwise. If water enters the cable, the water-swellable chemical interacts with the water and swells to impede and stop water flow lengthwise along the cable.

Further, in armoured cables, usually, a water blocking tape gets a reverse fold during manufacturing and optical fibers come out of it. If armour tape is right above, the bunches of optical fibers can trap in between two ends of armour tape and can lead to damage in optical fibers.

US6256438B1 discloses fibers enclosed by a metal armour having a water swellable coating on its inner surface. The reference also discloses about use of a separate water swellable layer.

US7590322B2 discloses about a water blocking tape over the ribbon stack and an overlapping position. The reference further discloses about a metal armour layer that is positioned above a central tube.

EP1170614A1 discloses an electro chrome coated steel (ECCS) tape with an overlap portion of at least 2mm. The ECCS is made up of a water blocking material that is applied over its inner surface. The optical fiber cables of the prior art references remain weaker and thereby the optical fibers are prone to damage.

Existing armoured optical fiber cables face issues with the optimal placement of layers, specifically water-blocking tapes and metallic layers. Reverse folding of water-blocking tapes and overlapping of metallic layers contribute to cable weakness, risking optical fiber damage.

The optical communication industry requires a solution that ensures no damage to optical fibers due to minor fluctuations in manufacturing process while overcoming the drawbacks of existing designs.

Accordingly, to overcome the disadvantages of the prior art, there is an urgent need for a technical solution that overcomes the above-stated limitations in the prior arts. The invention addresses challenges in metal armoured optical fiber cables where a water-blocking tape may reverse fold, causing optical fibers to protrude. This situation leads to potential damage, as optical fibers can get trapped between overlapping armour tape ends. The present disclosure proposes an optical fiber cable with metal armoring that provides enhanced protection providing a versatile and comprehensive solution to address the challenges in the optical communication industry.

### SUMMARY OF THE DISCLOSURE

Embodiments of the present disclosure relates to optical fiber cable characterized in that a plurality of optical fibers, a first layer wrapped around the plurality of optical fibers , a second layer that is wrapped around the first layer. In particular, the first layer comprises first and second end portions such that the first end portion overlaps the second end portion to define a first overlap region. And, the first overlap region has a first predefined width (W1) along an axial length of the optical fiber cable. further, the second layer comprises third and fourth end portions such that the third end portion overlaps the fourth end portion to define a second overlap region. Subsequently, the second overlap region has a second predefined width (W2) along the axial length of the optical fiber cable. The first overlap region and the second overlap region are positioned differently at one or more cross-section along the axial length of the optical fiber cable.

According to the first aspect of the present disclosure, first layer is made of at least one of, a water blocking tape (WBT) and a mica tape.

According to the second aspect of the present disclosure, the second layer is made of a metallic tape.

According to the third aspect of the present disclosure,the first and second overlap regions comprising first and second centres such that an angle between
(i) a plane joining the first centre with a centre of the optical fiber cable and
(ii) a plane joining the second centre with the centre of the optical fiber cable is restricted to an angle of 180 ± 45 Degrees.

According to the fourth aspect of the present disclosure, the first and second overlap regions comprises first and second center such that an angle between
(i) a plane joining the first center with a center of the optical fiber cable and
(ii) a plane joining the second center with the center of the optical fiber cable is restricted to an angle of 90 ± 45 Degrees.

According to the fifth aspect of the present disclosure, the first and second overlap regions comprises first and second centers such that an angle between
(i) a plane joining the first center with the center of the optical fiber cable and
(ii) a plane joining the second center with the center of the optical fiber cable is restricted to an angle of 270 ± 45 Degrees.

According to the sixth aspect of the present disclosure, the optical fiber cable further comprises one or more ripcords that are positioned between the first and second layers.

In accordance with an embodiment of the present disclosure, one or more ripcords are positioned between the first overlap region and the second overlap region.

According to the seventh aspect of the present disclosure, where the plurality of optical fibers is in the form of one of, bunches of ribbons and loose fibers.. Each ribbon of the bunches of ribbons is an intermittently bonded ribbon (IBR). And, a set of optical fibers of the plurality of optical fibers are disposed parallel to each other such that the set of optical fibers of the plurality of optical fibers are intermittently bonded by a plurality of bonded portions separated by a plurality of unbonded portions.

According to the eighth aspect of the present disclosure, the first predefined width (W1) is in a range between 5 millimeters (mm) and 10 mm. And, the second predefined width (W2) is in a range between 2 millimeters (mm) and 6 mm.

According to the ninth aspect of the present disclosure, the first predefined width (W1) is in a range between 5 millimeters (mm) and 10 mm. And, the second predefined width (W2) is in a range between 2 millimeters (mm) and 6 mm.

The foregoing objectives of the present disclosure are attained by providing an optical fiber cable with metal armoring.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating a cross-sectional view of an optical fiber cable in accordance with one embodiment of the present disclosure;
Fig. 2 is a pictorial snapshot illustrating cross-sectional view of another optical fiber cable in accordance with another embodiment of the present disclosure;
Fig. 3 is a pictorial snapshot illustrating perspective view of the optical fiber cable in accordance with an embodiment of the present disclosure.

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms shall apply throughout the present disclosure:**
Term "optical fiber" as used herein refers to a light guide that provides high-speed data transmission. The optical fiber has one or more glass core regions and a glass cladding region. The light moving through the glass core regions of the optical fiber relies upon the principle of total internal reflection, where the glass core regions have a higher refractive index (n1) than the refractive index (n2) of the glass cladding region of the optical fiber.
Term "optical fiber cable" as used herein refers to a cable that encloses a plurality of optical fibers.
Term "single mode fiber" as used herein refers to a single glass fiber strand that may allow transmission of the light. The single mode fiber may feature only transmission mode.
Term "multi-mode fiber" as used herein refers to an optical fiber that supports propagation of multiple modes.
Term "single core fiber" as used herein refers to an optical fiber that has single core for transmission of data/light.
Term "multi-core fiber" as used herein refers to an optical fiber that has multiple cores for transmission of data/light.
Term "intermittently bonded ribbon (IBR)" as used herein refers to an optical fiber ribbon having a plurality of optical fibers such that the plurality of optical fibers is intermittently bonded to each other by a plurality of bonded portions that are placed along the length of the plurality of optical fibers. The plurality of bonded portions is separated by a plurality of unbonded portions.

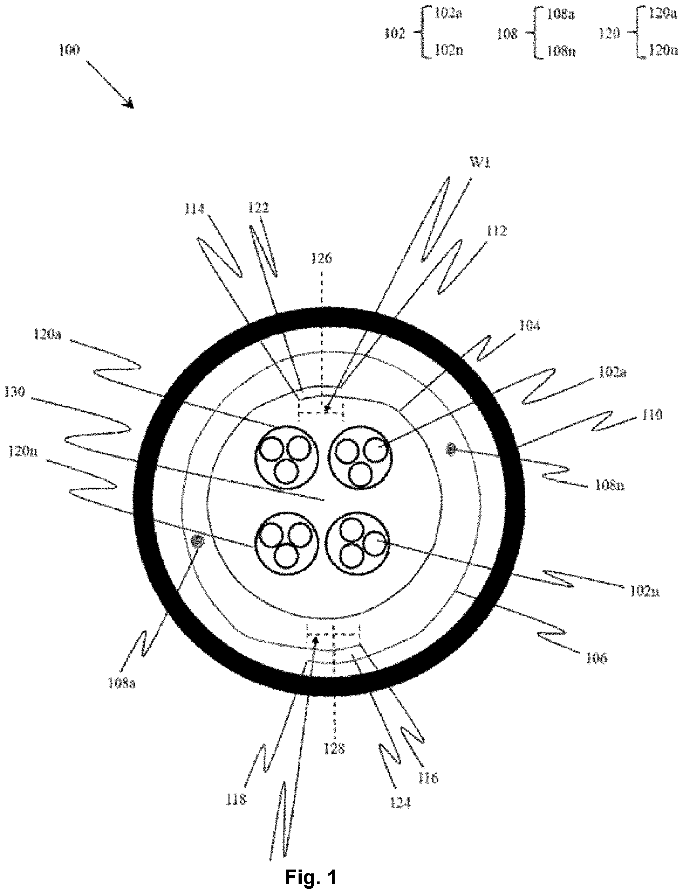

Fig. 1 is a pictorial snapshot illustrating a cross-sectional view of an optical fiber cable in accordance with one embodiment of the present disclosure. The optical fiber cable 100 may be installed through various aerial overhead poles or laid inside various ducts that may be used in different applications. In particular, the optical fiber cable 100 may have a plurality of optical fibers 1 02a-102n (hereinafter collectively referred to and designated as "the optical fibers 102"), a first layer 104, a second layer 106, one or more ripcords 108a-108n (hereinafter collectively referred to and designated as "the ripcords 108"), and a sheath 110. Moreover, the first layer 104 may have first and second end portions 112, 114 and the second layer 106 may have third and fourth end portions 116, 118.

In accordance with an embodiment of the present disclosure, the optical fibers 102 may be disposed within the optical fiber cable 100. Particularly, the optical fibers 102 may extend up to a length of the optical fiber cable 100. Moreover, each optical fiber of the optical fibers 102 may be a cylindrical dielectric waveguide that may facilitate transmission of light along the length of the optical fiber cable 100. Further, each optical fiber of the optical fibers 102 may have a core (not shown) and a clad layer (not shown) such that the clad layer may surround the core. Specifically, the light may travel through the core of each optical fiber of the optical fibers 102 and the clad layer may be adapted to prevent leakage of the light out of each optical fiber of the optical fibers 102.

In some preferred aspects of the present disclosure, the core and the clad layer may be made up of a dielectric material.

In accordance with an embodiment of the present disclosure, each optical fiber of the optical fibers 102 may be, but not limited to, a single mode fiber, a multi-mode fiber, a single core fiber, and a multi-core fiber. Aspects of the present disclosure are intended to include and/or otherwise cover any type of the optical fiber of the optical fibers 102, without deviating from the scope of the present disclosure.

In accordance with an embodiment of the present disclosure, the optical fibers 102 may be in the form of, but not limited to, bunches of ribbons 120a-120n (hereinafter collectively referred to and designated as "the ribbons 120") and loose fibers. Each ribbon of the bunches of ribbons 120 may be formed by grouping a set of optical fibers of the optical fibers 102. Moreover, grouping the set of optical fibers of the optical fibers 102 may involve adjoining or binding the set of optical fibers of the optical fibers 102. Further, the optical fibers 102 may be in form of, but not limited to, stacks of ribbons, bundles of ribbons, and intermittently bonded ribbon (IBR) bundles.

In accordance with an embodiment of the present disclosure, each ribbon of the ribbons 120 may be an intermittently bonded ribbon (IBR). Each IBR of the IBRs may have a set of optical fibers of the optical fibers 102 such that the set of optical fibers are disposed parallel to each other. In particular, the set of optical fibers of the optical fibers 102 may be intermittently bonded by a plurality of bonded portions separated by a plurality of unbonded portions.

In accordance with an embodiment of the present disclosure, each IBR of the IBRs may be placed without any binding element. Alternatively, each IBR of the IBRs may be placed with a binding element. Particularly, each IBR of the IBRs may be bound by way of one or more binders to form bundles of IBRs. Aspects of the present disclosure are intended to include and/or otherwise cover any form of the optical fiber of the optical fibers 102, without deviating from the scope of the present disclosure.

In accordance with an embodiment of the present disclosure, the first layer 104 may be wrapped around the optical fibers 102. The first end portion 112 may overlap with the second end portion 114 to define a first overlap region 122 while wrapping around the optical fibers 102. Particularly, the first overlap region 122 may have a first predefined width (W1) along an axial length of the optical fiber cable 100.

The first layer 104 may be, but not limited to, a water blocking tape (WBT) and a mica tape. Alternatively, the first layer 104 may be a fire-retardant water blocking tape, a heat barrier tape, a polyester tape, and the like. Aspects of the present disclosure are intended to include and/or otherwise cover any type of the first layer 104, without deviating from the scope of the present disclosure.

The second layer 106 may be wrapped around the first layer 104. The third end portion 116 may overlap with the fourth end portion 118 to define a second overlap region 124 while wrapping around the first layer 104. In particular, the second overlap region 124 may have a second predefined width (W2) along the axial length of the optical fiber cable 100.

In particular, the first overlap region 122 and the second overlap region 124 may be positioned differently at one or more cross-section along the axial length of the optical fiber cable 100. Alternatively, the first overlap region 122 and the second overlap region 124 may not co-exist or overlap at any cross section along the axial length of the optical fiber cable 100. Further, the first overlap region 122 and the second overlap region 124 may be spaced apart within an angular range at one or more cross-section along the axial length of the optical fiber cable 100.

In accordance with an embodiment of the present disclosure, the second layer 106 may be a metallic tape. Alternatively, the second layer 106 may be, but not limited to, a metal armor and an electrolytic chrome-coated steel (ECCS) tape. Aspects of the present disclosure are intended to include and/or otherwise cover any type of the second layer 106, without deviating from the scope of the present disclosure.

In accordance with an embodiment of the present disclosure, the first and second overlap regions 122 and 124 have first and second centers 126 and 128 such that an angle between
(i) a plane joining the first center 126 with a center 130 of the optical fiber cable 100 and (ii) a plane joining the second center 128 with the center 130 of the optical fiber cable 100 may be restricted by an angle of 180 Degrees (180°) with a tolerance value of 45 Degrees (45°).

The angle between the first and second centers 126 and 128 may be restricted to 180⁰ ± 45° to prevent the optical fibers 102 to come out from the optical fiber cable 100. Further, during manufacturing or handling of the optical fibers 102, the optical fibers 102 may come out of the first layer 104, however, by virtue of the angle of 180⁰ ± 45° between the first and second centers 126 and 128, so that the optical fibers 102 may not get trapped inside the overlap region 124 of the second layer 106 and prevent physical damage of the optical fibers 102.

In accordance with an embodiment of the present disclosure,
(i) the plane joining the first center 126 with the center 130 of the optical fiber cable 100 and
(ii) the plane joining the second center 128 with the center 130 of the optical fiber cable 100 may be restricted by an angle of 90 Degrees (90°) with a tolerance value of 45 Degrees (45°).

The angle between the first and second centers 126 and 128 may be restricted to 90° ± 45° to prevent the optical fibers 102 to come out from the optical fiber cable 100. Further, during manufacturing or handling of the optical fibers 102, the optical fibers 102 may come out of the first layer 104, however, by virtue of the angle of 90° ± 45° between the first and second centers 126 and 128, the optical fibers 102 may not get trapped inside the overlap region 124 of the second layer 106 and to prevent physical damage of the optical fibers 102.

In some aspects of the present disclosure, (i) the plane joining the first center 126 with the center 130 of the optical fiber cable 100 and (ii) the plane joining the second center 128 with the center 130 of the optical fiber cable 100 may be restricted by an angle of 270 Degrees (270°) with a tolerance value of 45 Degrees (45°).

The angle between the first and second centers 126 and 128 may be restricted to 270° ± 45° may prevent the optical fibers 102 from coming out from the optical fiber cable 100. Further, during manufacturing or handling of the optical fibers 102, the optical fibers 102 may come out of the first layer 104, however, by virtue of the angle of 270° ± 45° between the first and second centers 126 and 128, the optical fibers 102 may not get trapped inside the overlap region 124 of the second layer 106 and to prevent physical damage of the optical fibers 102.

In accordance with an embodiment of the present disclosure, the ripcords 108 may be positioned between the first and second layers 104 and 106. In particular, the ripcords 108 may be adapted to facilitate tearing of the sheath 110 and the second layer 106. Moreover, the ripcords 108 may be adapted to facilitate tearing of the sheath 110 and the second layer 106 to access the optical fibers 102. Further, the one or more ripcords 108a-108n may be positioned between the first overlap region 122 and the second overlap region 124 at any cross-section along the axial length of the optical fiber cable 100.

In accordance with an embodiment of the present disclosure, the first predefined width (W1) may be in a range between 5 millimeters (mm) and 10 mm. Specifically, the first predefined width (W1) may be preferably kept in the range between 5 millimeters (mm) and 10 mm, as the first predefined width (W1) being lesser than 5 mm may produce the first overlap region 122 of a smaller width, which may cause the optical fibers 102 to come out from the first overlap region 122. Further, the first predefined width (W1) being greater than 10 mm, may require additional material to be placed in the optical fiber cable 100, to leave low space for the optical fibers 102.

In accordance with an embodiment of the present disclosure, the second predefined width (W2) may be in a range between 2 mm and 6 mm. Specifically, the second predefined width (W2) may be preferably kept in the range between 2 mm and 6 mm, as the second predefined width (W2) being lesser than 2 mm, may produce the second overlap region 124 of a smaller width, which may add difficulty in manufacturing the optical fiber cable 100. The second predefined width (W2) being greater than 6 mm, may require additional material to be placed in the optical fiber cable 100, which may leave low space for the optical fibers 102.

In accordance with an embodiment of the present disclosure, material of the sheath 110 may be, but not limited to, polyethylene, low-smoke zero-halogen (LSZH), polyvinyl chloride (PVC), thermoplastic polyurethane (TPU), and the like. Aspects of the present disclosure are intended to include and/or otherwise cover any type of known and later developed materials, without deviating from the scope of the present disclosure.

In accordance with an embodiment of the present disclosure, the first layer 104 and the second layer 106 are at least partially in contact with each other along the axial length of the optical fiber cable 100.

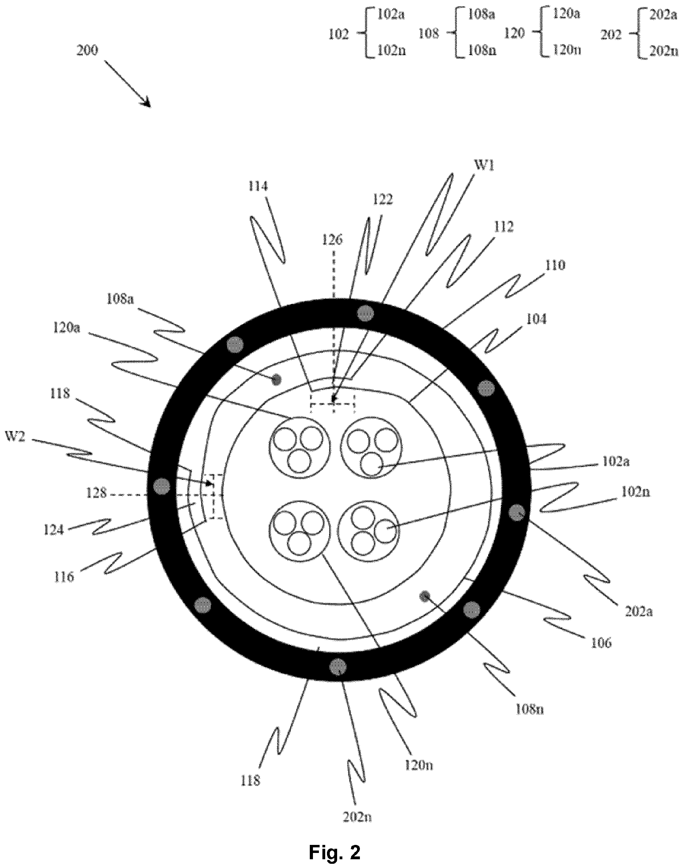

Fig. 2 is a pictorial snapshot illustrating a cross-sectional view of another optical fiber cable in accordance with another embodiment of the present disclosure. The optical fiber cable 200 may be substantially similar to the optical fiber cable 100, in terms of structural and functional aspects and the like elements of the optical fiber cable 100. Particularly, the optical fiber cable 200 is provided with a plurality of strength members 202a-202n (hereinafter collectively referred to and designated as "the strength members 202") embedded in the sheath 110. Moreover, the strength members 202 may provide the required tensile strength and stiffness to the optical fiber cable 200. Further, each strength member of the strength members 202 may be made up of, but not limited to, a reinforced aramid yarn, a reinforced glass yarn, and steel. Aspects of the present disclosure are intended to include and/or otherwise cover any type of material for each strength member of the strength members 202, without deviating from the scope of the present disclosure.

In accordance with an embodiment of the present disclosure, in the optical fiber cable 200, the plane joining the first center 126 with the center 130 of the optical fiber cable 100 and (ii) the plane joining the second center 128 with the center 130 of the optical fiber cable 100 may be restricted by an angle of 90 Degrees (90°) with a tolerance value of 45 Degrees (45°). The angle between the first and second centers 126 and 128 may be restricted to 90⁰ ± 45° prevent the optical fibers 102 to come out from the optical fiber cable 100. Further, during manufacturing or handling of the optical fibers 102, the optical fibers 102 may come out of the first layer 104, however, by virtue of the angle of 90⁰ ± 45° between the first and second centers 126 and 128, the optical fibers 102 may not get trapped inside the second overlap region 124 of the second layer 106. This may prevent physical damage of the optical fibers 102.

In accordance with an embodiment of the present disclosure, the first predefined width (W1) may be in a range between 5 millimeters (mm) and 10 mm.The first predefined width (W1) may be preferably kept in the range between 5 mm and 10 mm, as the first predefined width (W1) being lesser than 5 mm, may produce the first overlap region 122 of smaller width causing the optical fibers 102 to come out from the first overlap region 122. The first predefined width (W1) being greater than 10 mm, may require additional material to be placed in the optical fiber cable 100 to leave low space for the optical fibers 102.

In accordance with an embodiment of the present disclosure, the second predefined width (W2) may be in a range between 2 mm and 6 mm. The second predefined width (W2) may be preferably kept in the range between 2 mm and 6 mm, as the second predefined width (W2) being lesser than 2 mm, produces the second overlap region 124 of a smaller width, which may add difficulty in manufacturing the optical fiber cable 100. Further, the second predefined width (W2) being greater than 6 mm requires additional material to be placed in the optical fiber cable 100 that leaves low space for the optical fibers 102.

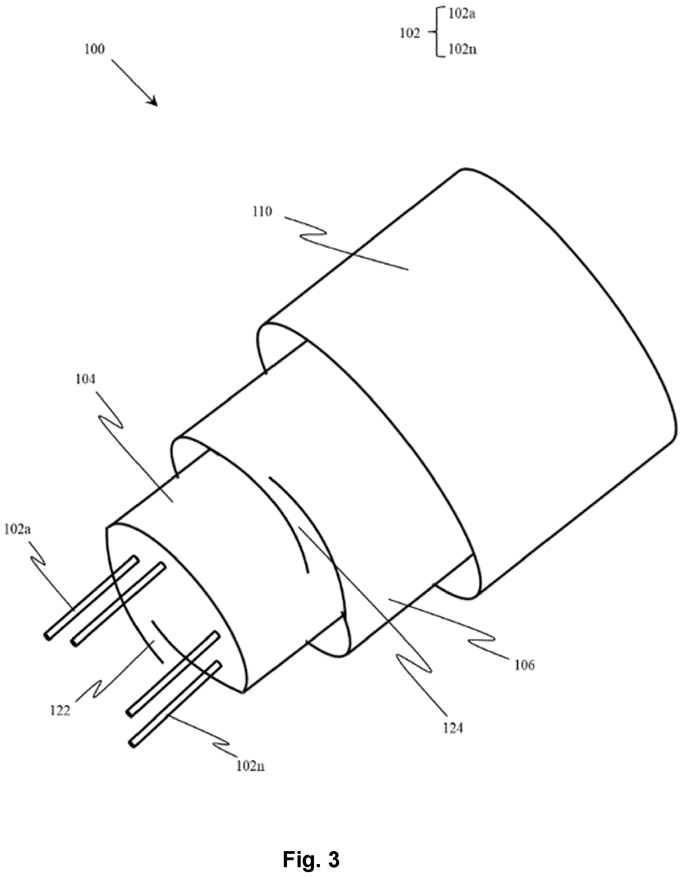

Fig. 3 is a pictorial snapshot illustrating perspective view of the optical fiber cable in accordance with an embodiment of the present disclosure. For sake of brevity, not all the elements or components of the optical fiber cable 100 but the first overlap region 122 of the first layer 104 and the second overlap region 124 of the second layer 106 are shown. In particular, the first overlap region 122 is disposed diametrically opposite to the second overlap region 124. And, the angle between (i) the plane joining the first center 126 with the center 130 of the optical fiber cable 100 and (ii) the plane joining the second center 128 with the center 130 of the optical fiber cable 100 may be restricted to 180⁰ ± 45° that may prevent the optical fibers 102 to come out from the optical fiber cable 100. Further, during manufacturing or handling of the optical fibers 102, the optical fibers 102 may come out of the first layer 104, however, by virtue of the angle of 180⁰ ± 45° between the first and second centers 126 and 128, the optical fibers 102 may not get trapped inside the overlap region 124 of the second layer 106 and this prevents physical damage of the optical fibers 102.

In accordance with one or more embodiments of the present disclosure, the optical fiber cable (100) comprises a plurality of optical fibers (102a-102n), a first layer (104), a second layer (106

The first layer (104) is wrapped around the plurality of optical fibers (102a-102n), where the first layer (104) includes first and second end portions (112, 114) such that the first end portion (112) overlaps the second end portion (114) to define a first overlap region (122), where the first overlap region (122) has a first predefined width (W1) along an axial length of the optical fiber cable (100).

The second layer (106) is wrapped around the first layer (104), and comprises third and fourth end portions (116, 118) such that the third end portion (116) overlaps the fourth end portion (118) to define a second overlap region (124), where the second overlap region (124) has a second predefined width (W2) along the axial length of the optical fiber cable (100).

Further, the first overlap region (122) and the second overlap region (124) are positioned at an angle greater than zero degree with respect to the center of the optical fiber cable (100) when viewed in one or more cross-section the optical fiber cable (100).

The first layer (104) is made of at least one of, a water blocking tape (WBT) and a mica tape. And the second layer (106) is made up of a metallic tape.

The disclosed optical fiber cable introduces a layer configuration, with a first layer comprising a water-blocking tape or mica tape, and a second layer comprising a metallic tape. In particular, the first and second overlap regions are strategically positioned differently along the axial length, overcoming weaknesses seen in conventional cables.

In addition to preventing optical fiber damage, the optical fiber cable design with the layer placement offers advantages such as reduced cable diameter, reduced scrap, enhanced tolerance to manufacturing process. This configuration ensures optimal performance and reliability.

The placement of the first and second layers, comprising water-blocking or mica tape and metallic tape, respectively. The distinct positioning of overlap regions along the axial length ensures that potential weaknesses are minimized, preventing optical fiber damage.

The synergistic effect results from the combination of water-blocking or mica tape in the first layer and metallic tape in the second layer, strategically placed to avoid weaknesses. The distinct positioning of overlap regions ensures that potential damage points are minimized, enhancing the overall robustness and reliability of the optical fiber cable.

In practical scenarios, the optical fiber cable with the metal armor layer configuration demonstrates improved prevention of optical fiber damage in armoured cables. This makes the cable suitable for faster manufacturing while ensuring reliable communication in critical environments.

Advantageously, the optical fiber cables 100 and 200 have a reduced diameter. By virtue of relative positioning of the first overlap region 122 with respect to the second overlap region 124, the optical fibers 102 are protected from any kind of physical damage. Further, by virtue of relative positioning of the first overlap region 122 with respect to the second overlap region 124, the optical fibers 102 may not get trapped in the second layer 106, if by any chance the optical fibers 102 comes out from the first layer 104.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable (100) **characterized in that**:
a plurality of optical fibers (102a-102n);
a first layer (104) wrapped around the plurality of optical fibers (102a-102n), where the first layer (104) comprising first and second end portions (112, 114) such that the first end portion (112) overlaps the second end portion (114) to define a first overlap region (122), where the first overlap region (122) has a first predefined width (W1) along an axial length of the optical fiber cable (100);
a second layer (106) that is wrapped around the first layer (104), and comprising third and fourth end portions (116, 118) such that the third end portion (116) overlaps the fourth end portion (118) to define a second overlap region (124), where the second overlap region (124) has a second predefined width (W2) along the axial length of the optical fiber cable (100);
wherein the first overlap region (122) and the second overlap region (124) are positioned differently at one or more cross-section along the axial length of the optical fiber cable (100).

2. The optical fiber cable (100) of claim 1, wherein the first layer (104) is made of at least one of, a water blocking tape (WBT) and a mica tape.

3. The optical fiber cable (100) of claim 1, wherein the second layer (106) is made of a metallic tape.

4. The optical fiber cable (100) of claim 1, wherein the first and second overlap regions (122, 124) comprising first and second centres (126, 128), respectively, such that an angle between
(i) a plane joining the first centre (126) with a centre (130) of the optical fiber cable (100) and
(ii) a plane joining the second centre (128) with the centre (130) of the optical fiber cable (100) are restricted to an angle of 180 ± 45 Degrees.

5. The optical fiber cable (100) of claim 1, wherein the first and second overlap regions (122, 124) comprising first and second centers (126, 128) respectively, such that an angle between
(i) a plane joining the first center (126) with a center (130) of the optical fiber cable (100) and
(ii) a plane joining the second center (128) with the center (130) of the optical fiber cable (100) are restricted to an angle of 90 ± 45 Degrees.

6. The optical fiber cable (100) of claim 4, wherein the first and second overlap regions (122, 124) comprising first and second centers (126, 128) respectively, such that an angle between
(i) a plane joining the first center (126) with the center (130) of the optical fiber cable (100) and
(ii) a plane joining the second center (128) with the center (130) of the optical fiber cable (100) are restricted to an angle of 270 ± 45 Degrees.

7. The optical fiber cable (100) of claim 1, wherein the optical fiber cable further comprising one or more ripcords (108a-108n) that are positioned between the first and second layers (104, 106).

8. The optical fiber cable (100) of claim 7, wherein the one or more ripcords (108a-108n) are positioned between the first overlap region (122) and the second overlap region (124).

9. The optical fiber cable (100) of claim 1, where the plurality of optical fibers (102a-102n) is in form of one of, bunches of ribbons and loose fibers.

10. The optical fiber cable (100) of claim 9, where each ribbon of the bunches of ribbons is an intermittently bonded ribbon (IBR), where set of optical fibers of the plurality of optical fibers (102a-102n) are disposed parallel to each other such that the set of optical fibers of the plurality of optical fibers (102a-102n) are intermittently bonded by a plurality of bonded portions separated by a plurality of unbonded portions.

11. The optical fiber cable (100) of claim 1, where the first predefined width (W1) is in a range between 5 millimeters (mm) and 10 mm.

12. The optical fiber cable (100) of claim 1, where the second predefined width (W2) is in a range between 2 millimeters (mm) and 6 mm.

13. The optical fiber cable (100) of claim 1, where the first layer (104) and the second layer (106) are at least partially in contact with each other along the axial length of the optical fiber cable (100).

14. An optical fiber cable (100) **characterized in that**:
a plurality of optical fibers (102a-102n);
a first layer (104) wrapped around the plurality of optical fibers (102a-102n), where the first layer (104) comprising first and second end portions (112, 114) such that the first end portion (112) overlaps the second end portion (114) to define a first overlap region (122), where the first overlap region (122) has a first predefined width (W1) along an axial length of the optical fiber cable (100);
a second layer (106) that is wrapped around the first layer (104), and comprising third and fourth end portions (116, 118) such that the third end portion (116) overlaps the fourth end portion (118) to define a second overlap region (124), where the second overlap region (124) has a second predefined width (W2) along the axial length of the optical fiber cable (100);
wherein the first overlap region (122) and the second overlap region (124) are positioned at an angle greater than zero degree with respect to center of the optical fiber cable (100) when viewed in one or more cross-section the optical fiber cable (100).

15. The optical fiber cable (100) of claim 14, where the first layer (104) is made of at least one of, a water blocking tape (WBT) and a mica tape.
